# EUROPÄISCHE PATENTSCHRIFT

(11) **EP 2 295 324 B1**
(45) Veröffentlichungstag und Bekanntmachung des Hinweises auf die Patenterteilung: **24.04.2013**
(21) Anmeldenummer: 10171691.8
(22) Anmeldetag: 03.08.2010
(51) Int. Cl.: B65B 55/02, B65B 55/10, B29C 49/42, B67C 7/00

(54) **Verfahren und Vorrichtung zum Streckblasformen oder Blasformen und Füllen steriler Behälter**
Method and device for stretch blow moulding or blow moulding and filling of sterile containers
Procédé et dispositif de moulage par étirage-soufflage ou de moulage par soufflage et de remplissage de récipients stériles

(30) Priorität: 11.09.2009 DE 102009041215
(43) Veröffentlichungstag der Anmeldung: 16.03.2011
(73) Patentinhaber: Krones AG, 93073 Neutraubling (DE)
(72) Erfinder: Roithmeier, Stefan, 93073 Neutraubling (DE); Höllriegl, Thomas, 93158 Teublitz (DE); Stoiber, Christian, 93185 Michelsneukirchen (DE); Laumer, Roland, 93047 Regensburg (DE); Braun, Franz, 93053 Regensburg (DE); Söllner, Jürgen, 93176 Beratzhausen (DE); Dahmen, Michael, 22527 Hamburg (DE); Neubauer, Michael, 93053 Regensburg (DE); Engelhard, Patrick, 84094 Elsendorf (DE)
(74) Vertreter: Grünecker, Kinkeldey, Stockmair & Schwanhäusser

(56) Entgegenhaltungen:
- EP-A2- 1 837 157
- EP-B1- 1 012 047
- FR-A1- 2 766 169
- JP-A- 03 290 226

## Beschreibung

Die Erfindung betrifft ein Verfahren gemäß Oberbegriff des Patentanspruchs 1 sowie eine Vorrichtung gemäß Oberbegriff des Patentanspruchs 7.

Bei dem aus DE 10 2006 053 193 A bekannten Verfahren werden die aus den Vorformlingen blasgeformten oder streckblasgeformten Behälter im Transportweg zwischen dem Blasmodul und der Füllmaschine sterilisiert. Dabei erfolgt zunächst eine innenseitige Sterilisationsbehandlung, dann eine außenseitige Sterilisationsbehandlung in einem Außentunnel, und schließlich eine Spülung mit Sterilluft. Der apparative Aufwand und Steuerungsaufwand für die Sterilisationsbehandlung sind hoch. Es werden beispielsweise Behandlungssterne mit aufwändig gesteuerten Hubvorrichtungen benötigt und muss mit relativ niedrigen Drücken und Temperaturen gearbeitet werden, weil die blasgeformten Behälter dünne Wände und große Flächen aufweisen. Die zum Durchführen des Verfahrens geeignete Vorrichtung baut groß bzw. enthält sehr lange Transportwege speziell für die Behälter.

Bei dem aus EP 1 896 245 A bekannten Verfahren werden an den Vorformlingen zwei Sterilisationsbehandlungen bereits im Transportweg zum Blasmodul ausgeführt, nämlich eine erste Sterilisationsbehandlung vor der Heizvorrichtung und eine weitere Sterilisationsbehandlung nach der Heizvorrichtung. Jedoch kommen speziell im Blasmodul so viele Komponenten mit den Vorformlingen und den Behältern in Kontakt, die mit vertretbarem Aufwand nicht in einen sterilen Zustand bringbar sind, dass die Behälter beim Füllen gegebenenfalls wieder kontaminiert sind. Allerdings berücksichtigt dieses bekannte Verfahren die Tatsache, dass eine Sterilisationsbehandlung der Vorformlinge hinsichtlich des eingesetzten Drucks und der Temperaturen relativ aggressiv und deshalb effizient durchgeführt werden kann, weil die Vorformlinge mit relativ dicker Wandstärke kleinere Oberflächen haben und auf eine zur Sterilisationsbehandlung günstige Temperatur gebracht sind, und eventuelle Rückstände beim Blasformen oder Streckblasformen durch Austausch des Luftvolumens weitgehend entfernt werden. Schließlich lässt sich für das bei der Sterilisationsbehandlung verwendete Medium wegen der Robustheit des Vorformlings eine höhere Temperatur wählen, was die Effizienz der Sterilisationsbehandlung steigert.

Bei dem aus WO 2009/052800 A bekannten Verfahren wird eine erste Sterilisationsbehandlung an den Vorformlingen in deren Transportweg zu der Heizvorrichtung bis in die Heizvorrichtung mit von Generatoren erzeugten Energiestrahlen vorgenommen, und wird eine weitere Sterilisationsbehandlung an den Behältern entlang des Transportweges der Behälter vom Blasmodul zu einer Ausgabestrecke des Blasmoduls erneut mit Energiestrahlen eines Generators vorgenommen. Die Vorformlinge können in der Heizvorrichtung und die Behälter können in den Blasformen und auf dem Transportweg bis zur Füllmaschine jeweils wieder kontaminiert werden.

Bei dem aus EP 0 996 530 A bekannten Verfahren werden die Vorformlinge und die Behälter jeweils einer Sterilisationsbehandlung unterworfen. Die Sterilisationsbehandlung der Vorformlinge erfolgt bereits vor der Heizvorrichtung und bis in die Heizvorrichtung, oder zwischen der Heizvorrichtung und dem Blasmodul. Die Sterilisationsbehandlung der Behälter erfolgt als Abschluss der Blasformung, sodass diese nachfolgend wieder kontaminiert werden können.

Weiterer Stand der Technik ist enthalten in: EP 1 012 047 B1, EP 1 837 157 A, FR 2 766 169 A und JP 03 290226.

Der Erfindung liegt die Aufgabe zugrunde, ein Verfahren der eingangs genannten Art und eine zum Durchführen des Verfahrens geeignete Vorrichtung anzugeben, die mit wenig apparativem und steuerungstechnischem Aufwand und nur moderatem Platzbedarf für die Befüllung zuverlässig sterile Behälter herzustellen erlauben.

Die gestellte Aufgabe wird verfahrenstechnisch mit den Merkmalen des Patentanspruchs 1 und bezüglich der Vorrichtung mit den Merkmalen des Patentanspruchs 7 gelöst.

In dem die Hauptsterilisationsbehandlung an den Vorformlingen durchgeführt wird, deren zu behandelnde hochtemperierte Oberfläche relativ klein und widerstandsfähig ist, kann aggressiver und damit effizienter gearbeitet werden, so dass die aus dem Blasmodul kommenden Behälter bereits einen weitestgehend sterilen Standard erfüllen und die Nachsterilisationsbehandlung relativ einfach sein kann, um auch die Behälter tatsächlich steril zu machen, d.h., dass bei der Nachsterilisationsbehandlung allenfalls nur noch Stäube und gegebenenfalls Reste des Mediums aus der Hauptsterilisationsbehandlung zu beseitigen sind. Allerdings bleibt die Gefahr von Resten von der Hauptsterilisationsbehandlung außerordentlich gering, da im Blasmodul ein mehrfacher Austausch des Luftvolumens stattfindet, der auch eventuell vorhandene Restbestandteile beseitigt. Da aufgrund der Robustheit der Vorformlinge, z.B. bei Verwendung eines gasförmigen oder flüssigen Mediums für die Sterilisationsbehandlung mit hohen Temperaturen und Drücken gearbeitet werden kann, ist für die Hauptsterilisationsbehandlung nur eine relativ kurze Transportstrecke erforderlich. Auch für die sicherheitshalber vorgenommene Nachsterilisationsbehandlung der Behälter, sind wenig Zeit und apparativer Aufwand nötig, beispielsweise werden keine Ausblassteme oder Bearbeitungssterne mit Hubsteuerungen gebraucht, die bei ausschließlicher Sterilisationsbehandlung nur der Behälter unabdingbar sind. Somit lässt sich der apparative und damit auch steuerungstechnische Aufwand zur Durchführung des Verfahrens reduzieren.

Die Vorrichtung hat aufgrund der apparativen Vereinfachung und kürzeren Transportstrecken zum Durchführen der Sterilisationsbehandlungen weniger Platzbedarf. Der Wegfall von Ausblassternen oder Bearbeitungssternen mit Hubsteuerungen verringert den steuerungstechnischen und apparativen Aufwand. Es wird bei der Hauptsterilisationsbehandlung schon so gründlich gearbeitet, dass die Vorformlinge praktisch steril in den Blasmodul gelangen, und eventuelle Reste von zuvor verwendeten Medien ohnedies durch die hohen Temperaturen und den Luftaustausch beim Blasformen oder Streckblasformen verschwinden, so dass der Nachsterilisationsmodul kompakt gestaltet werden kann, weil dort die Verweilzeit der Behälter kurz ist.

Da verfahrensgemäß die Hauptsterilisationsbehandlung unter Nutzen der Robustheit der Vorformlinge und deren hoher Temperatur relativ aggressiv durchführbar ist und bereits weitestgehend sterile Vorformlinge erzielen lässt, braucht bei der Nachsterilisationsbehandlung weniger aggressiv und auch nur relativ kurz gearbeitet zu werden. Dabei lassen sich unterschiedliche Technologien für die Sterilisationsbehandlungen anwenden und universell kombinieren. Beispielsweise wird bei der Hauptsterilisationsbehandlung mit einem gasförmigen Medium, vorzugsweise mit thermisch behandeltem Wasserstoffperoxid in Gas- oder Dampfform und mit relativ hohen Temperaturen und Drücken gearbeitet, während bei der Nachsterilisationsbehandlung entweder ebenfalls mit diesem gasförmigen Medium, dann gegebenenfalls mit geringerer Temperatur und geringerem Druck gearbeitet wird, und/oder mit einem flüssigen Medium, vorzugsweise auf Peressigsäure-Basis, hauptsächlich um noch gegebenenfalls im Blasmodul eingetragenen Kontaminationen und Stäube zuverlässig zu beseitigen.

Als weitere Alternative bietet sich wegen der gesteigerten Effizienz eine Sterilisationsbehandlung mit Elektronenstrahlen an. Diese Sterilisationsbehandlung kann als Hauptsterilisationsbehandlung und als Nachsterilisationsbehandlung eingesetzt werden, oder es wird nur bei der Hauptsterilisationsbehandlung mit Elektronenstrahlen gearbeitet, während bei der Nachsterilisationsbehandlung mit einem gasförmigen Medium und/oder einem flüssigen Medium gearbeitet wird, da bei der Hauptsterilisationsbehandlung ja bereits weitestgehend sterile Vorformlinge erzielt werden.

Zumindest die Hauptsterilisationsbehandlung sollte in einer Reinraum-Umgebung ausgeführt werden, um das Eintragen von Kontaminationen und Keimen von außen her auszuschließen oder zu minimieren. In der Reinraum-Umgebung kann ein höherer Reinraum-Druck aufgebaut werden, als der Druck, der stromauf und stromab der Reinraum-Umgebung herrscht, so dass keine stromauf oder stromab zirkulierenden Kontaminationen und/oder Keime in die Reinraum-Umgebung eindringen. Medium gearbeitet wird, da bei der Hauptsterilisationsbehandlung ja bereits weitestgehend sterile Vorformlinge erzielt werden.

Zumindest die Hauptsterilisationsbehandlung sollte in einer Reinraum-Umgebung ausgeführt werden, um das Eintragen von Kontaminationen und Keimen von außen her auszuschließen oder zu minimieren. In der Reinraum-Umgebung kann ein höherer ReinraumDruck aufgebaut werden, als der Druck, der stromauf und stromab der Reinraum-Umgebung herrscht, so dass keine stromauf oder stromab zirkulierenden Kontaminationen und/oder Keime in die Reinraum-Umgebung eindringen.

Bei einer zweckmäßigen Verfahrensvariante wird zumindest die Hauptsterilisationsbehandlung an einem Behandlungsstern durchgeführt, der in einer bis auf Übergabebereiche umschließenden Behandlungskammer angeordnet ist, wobei die Behandlungskammer, vorzugsweise, wiederum in der Reinraum-Umgebung positioniert ist. Hierbei kann in die Behandlungskammer permanent eine Sterilluftströmung eingeführt werden, die, vorzugsweise, über die Übergabebereiche umgebende Abluftkästen abgeblasen oder abgesaugt wird, so dass in der Behandlungskammer gegen stromauf und stromab jeweils eine Art Schleusenwirkung ergibt. Bei der Sterilluftströmung kann es sich auch ein gasförmiges H2O2-Gemisch handeln.

Damit die Reinraum-Umgebung mit relativ geringem Aufwand sauber gehalten werden kann, ist es zweckmäßig, die Abluft aus der Behandlungskammer unter Umgehen der Reinraum-Umgebung nach außen abzuführen oder abzusaugen. Denn bei der Hauptsterilisationsbehandlung und/oder der Nachsterilisationsbehandlung werden Kontaminationen oder Keime freigesetzt, die mit der Abluft die Umgebung verschmutzen könnten. Denn es ist nicht in jedem Fall sichergestellt, dass z.B. alle Keime sofort abgetötet werden konnten.

Bei einer zweckmäßigen Ausführungsform der Vorrichtung sind der Hauptsterilisationsmodul im Transportweg der Vorformlinge zwischen der die Vorformlinge von der Heizvorrichtung liefernden Transportvorrichtung und einer den Blasmodul beschickenden Transportvorrichtung und der Nachsterilisationsmodul im Transportweg der Behälter zwischen einer die Behälter aus dem Blasmodul entnehmenden Transportvorrichtung und einer die Behälter in die Füllmaschine transferierenden Transportvorrichtung jeweils zwischengeschaltet. Hierbei brauchen die Transportwege für die Vorformlinge und die Behälter aufgrund der beiden Module nur geringfügig verlängert zu werden. Die Module fügen sich problemlos in den Prozessablauf ein.

Zweckmäßig weist der Hauptsterilisationsmodul und/oder der Nachsterilisationsmodul jeweils einen Behandlungsstern und entweder Zufuhr- und Applikationseinrichtungen für gasförmige oder flüssige Medien oder wenigstens einen Elektronenstrahl-Generator zum Applizieren von Elektronenstrahlen auf und/oder in die Vorformlinge bzw. die Behälter auf. Der Behandlungsstern kann bei geringem Platzbedarf eine relativ lange Behandlungsstrecke bieten, um die Vorformlinge bzw. Behälter effizient zu behandeln. Dabei kann der den Behandlungsstern umgebende Raum z.B. in einer Behandlungskammer klein gehalten werden und eine relativ hohe Konzentration zumindest des gasförmigen Mediums enthalten, um zufälligen Zutritt von Kontaminationen und/oder Keimen zum Behandlungsstern auszuschließen.

Zweckmäßig ist der Behandlungsstern in einer an eine Belüftungsquelle angeschlossenen Behandlungskammer mit Zufuhr- und Abfuhr-Übergangsbereiche abdeckenden Abluftkästen angeordnet. Die Behandlungskammer bildet eine wirksame Abschirmung bei der Sterilisationsbehandlung. Die Gefahr des Eintritts von Verunreinigungen oder Keimen in die Behandlungskammer lässt sich noch weiter reduzieren, wenn, vorzugsweise, die Behandlungskammer mit den Abluftkästen in einer Reinraum-Umgebung angeordnet wird, die beispielsweise dem Blasmodul oder der Füllmaschine zugeordnet ist. Die Reinraum-Umgebung ist für die hohen hygienischen Anforderungen bei der Abfüllung zweckmäßig, und für die des Blasmodul selbst.

Bei einer baulich einfachen zweckmäßigen Ausführungsform sind die Abluftkästen mit verstellbaren Abluftventilen, vorzugsweise Klappenventilen, versehen und, vorzugsweise, sogar an eine die Reinraum-Umgebung der Behandlungskammer nach außen umgehende AbluftAbführung angeschlossen. Die Abluftventile lassen die jeweiligen Abluftströmungen präzise und prozessverlaufsabhängig einstellen, und gegebenenfalls sogar unterschiedlich, um den Druckverhältnissen stromauf und stromab der Behandlungskammer Rechnung zu tragen. Die Abluftabführung schließt eine Verschmutzung der Reinraum-Umgebung von innen her aus. Es kann sogar eine Absaugung der Abluft aus der Behandlungskammer und/oder der Reinraum-Umgebung vorgesehen sein, um konkret definierte Strömungs- und Druckverhältnisse sowohl in der Behandlungskammer als auch in der Reinraum-Umgebung sicherzustellen.

Bei einer baulich einfachen Ausführungsform weisen die Applikationseinrichtungen für ein gasförmiges und/oder flüssiges Medium jeweils einen am Behandlungsstern angeordneten, unterseitig offenen Glockenkörper mit innenliegenden Umlenkflächen für eine Außenbehandlung des Vorformlings bzw. des Behälters und einer mittigen Düse auf, die eine gegenüber der Achse des Vorformlings oder des Behälters zur Seite schräg angeordnete Düsenöffnung besitzt. Die schräg angeordnete Düsenöffnung dirigiert das Medium seitlich gegen die Innenwand des Vorformlings oder des Behälters, so dass die gesamte Innenwand relativ schnell und intensiv beaufschlagt wird, und die dabei entstehende Strömung auch relativ unbehindert wieder aus der Mündung austreten kann. Nach dem Austritt aus der Mündung des Vorformlings oder des Behälters wird die Strömung an den Umlenkflächen im Glockenkörper umgelenkt und von außen auf den Mündungsbereich gerichtet, um auch diesen entsprechend zu beaufschlagen. Ebenso ist es denkbar, die Düse derart zu gestalten, dass die Strömung zirkulierend in den Vorformling oder Behälter eingeleitet wird.

Bei einer zweckmäßigen Ausführungsform kann der Glockenkörper an einer Hubsteuervorrichtung des Behandlungssterns relativ zu einer Fixierung für den Vorformling oder den Behälter anhebbar und absenkbar angeordnet sein, um einerseits die Sterilisationsbehandlung so intensiv wie möglich vornehmen zu können, und andererseits Manipulationen bei Übernahme und Abgabe des Vorformlings bzw. Behälters nicht zu beeinträchtigen.

Baulich einfach ist der Glockenkörper in dem Nachsterilisationsmodul an dem Behandlungsstern auf eine Fixierung für den Behälter ausgerichtet und derart stationär montiert, dass zwischen der Mündung des in der Fixierung positionierten Behälters und der Unterseite des Glockenkörpers und der Düsenöffnung ein Manipulationsspalt gebildet wird. Dieser Manipulationsspalt erlaubt die nur seitliche Übernahme und Abgabe des Behälters ohne Kollisionen mit dem Glockenkörper, obwohl dieser keine Hubsteuervorrichtungen benötigt, was den Behandlungsstern baulich und steuerungstechnisch sehr vereinfacht. Es wird im Übrigen bei dem Nachsterilisationsmodul nicht wie früher noch ein Ausblasstern, gegebenenfalls ebenfalls mit Hubsteuerungen oder Wendevorrichtungen, benötigt, da mit dem Glockenkörper und der Düse Reste zuverlässig ausgetrieben werden können.

Um dennoch die Abgabe des Behälters zuverlässig steuern zu können, kann bei einer weiteren Ausführungsform die Fixierung ein unter einem Tragring am Behälter angreifender Klammergreifer sein, der den Behälter bei der Nachsterilisationsbehandlung sicher am Behandlungsstern hält. In zumindest dem Abgabebereich vom Behandlungsstern zur nachgeordneten Transportvorrichtung kann ein stationärer Ausleitfinger sicherheitshalber unterhalb oder oberhalb der Bewegungsbahn des Klammergreifers am Behandlungsstern montiert sein, der sich schräg gegenüber der Bewegungsbahn des im Klammergreifer gehaltenen Behälters erstreckt und gegen die der Transportvorrichtung abgewandte Seite des Behälters zum Ausleitangriff bringbar ist. Der Ausleitfinger ermöglicht es, die Übergabe des Behälters, ohne den Behälter weiter berühren zu müssen, zuverlässig abläuft. Der Ableitfinger kann im Übrigen auch bei dem Behandlungsstern im Hauptsterilisationsmodul in analoger Weise eingesetzt werden, um zu vermeiden, bei der Abgabe des Vorformlings verschmutzungsgefährlichen und/oder deformierenden Hilfseinrichtungen zu berühren.

Bei einer weiteren, zweckmäßigen Ausführungsform weist der Glockenkörper in dem Hauptsterilisationsmodul in der offenen Unterseite mehrere schmale Auflagestreben auf, oder ist der Glockenkörper mit der offenen Unterseite auf einer austauschbar im Behandlungsstern montierten Platte angebracht, die die Auflagestreben aufweist, wobei zwischen den Auflagestreben breite Durchströmpassagen zu und von den Umlenkflächen des Glockenkörpers definiert sind. Die Auflagestreben behindern somit die auch zur Außenbehandlung des Vorformlings wünschenswerte Strömungsumlenkung nicht, ermöglichen es jedoch, den Vorfomling auf der Fixierung stabil festzuspannen, sobald sie auf der Mündung aufliegen. Zweckmäßig weichen die Auflagestreben von einem Umfangsrand allmählich zu der Düse zurück, so dass sich die Düsenöffnung oder ein Teil der Düse gegenüber den Auflagestreben nach unten erstreckt. Durch diese schräge Anordnung der Auflagestreben lässt sich der Glockenkörper so tief positionieren, dass er in Aufsetzrichtung über die Mündung des Vorformlings greift und die an den Umlenkflächen umgelenkte Strömung zumindest den oberen Bereich der Außenseite des Vorformlings gründlich beaufschlagt, während gleichzeitig die Düse mit der Düsenöffnung in die Mündung des Vorformlings eindringt.

Da somit der Glockenkörper bei der Fixierung des Vorformlings am Behandlungsstern mitwirkt, was insbesondere bei der Übernahme von der zuliefernden Transportvorrichtung und bei der Behandlung zweckmäßig ist, braucht die Fixierung für den Vorformling am Behandlungsstern nur Tragfinger für den Tragring des Vorformlings aufzuweisen, auf die der Tragring aufgelegt wird, während der Glockenkörper auf die Mündung aufgesetzt wird und den Tragring auf die Tragfinger presst. Die Tragfinger sind zweckmäßig an einer austauschbaren Tragplatte am Behandlungsstern angeordnet, um die Umrüstzeit bei der Umstellung auf einen anderen Vorformling so kurz wie möglich halten zu können. Zwischen den Tragfingern werden, vorzugsweise, Durchströmpassagen zu einem darunterliegenden Freiraum definiert, damit die die Außenoberfläche des Vorformlings zumindest im Mündungsbereich beaufschlagende, umgelenkte Strömung effizient wirken kann. Die Hubsteuervorrichtung zum Bewegen des Glockenkörpers relativ zur Fixierung am Behandlungsstern weist zweckmäßig zumindest ein den Glockenkörper tragendes Führungselement auf, das im Behandlungsstern verschiebbar geführt und über ein Tastrad durch eine Kurvensteuerung verschiebbar ist. Die Kurvensteuerung wirkt zweckmäßig so, dass der abgesenkte Glockenkörper bei der Übernahme eines Vorformlings diesen auf der Fixierung festlegt, hingegen vor der Abgabe des Vorformlings bereits angehoben ist, so dass der Vorformling leicht transferiert werden kann, gegebenenfalls unter Mitwirkung des bereits erwähnten Ableitfingers. Die Fixierung des Vorformlings kann besonders einfach durch eine Vorformlings-Fixierfeder bewirkt werden, die das Führungselement oder die Tastrolle in Aufsetzrichtung des Glockenkörpers auf die Mündung des Vorformlings beaufschlagt. Dies ist ein besonders einfacher Fixiermechanismus, der durch die Hubsteuervorrichtung gelöst wird.

Um die Betriebsgefahr der Vorrichtung zu minimieren, kann es ferner zweckmäßig sein, wenn in dem mit Energiestrahlen arbeitenden Hauptsterilisationsmodul und/oder Nachsterilisationsmodul zumindest der Energiestrahl-Generator, oder sogar der gesamte Modul, in einer abgeschirmten Strahlungsschleuse angeordnet ist.

Anhand der Zeichnungen werden Ausführungsformen des Erfindungsgegenstandes erläutert. Es zeigen:
- Fig. 1: eine Schemadraufsicht auf eine erste Ausführungsform einer Vorrichtung zum Blasformen und Füllen von Behältern aus Vorformlingen eines thermoplastischen Materials,
- Fig. 2: eine Schemadraufsicht auf eine weitere Ausführungsform der Vorrichtung,
- Fig. 3: eine Schemadraufsicht auf eine weitere Ausführungsform der Vorrichtung,
- Fig. 4: eine Schemadraufsicht auf einen Teil der Vorrichtung der Fig. 1 bis 3 zur Verdeutlichung eines Belüftungsprinzips bei einer Sterilisationsbehandlung,
- Fig. 5: eine perspektivische Druntersicht eines Details aus den Fig. 1 bis 4,
- Fig. 6: eine Perspektivansicht eines weiteren Details,
- Fig. 7: eine Schema-Schnittdarstellung eines weiteren Details,
- Fig. 8: eine schematische Draufsicht, beispielsweise zu Fig. 5 oder Fig. 7, und
- Fig. 9: eine Perspektivdarstellung eines weiteren Details als Alternative zu Fig. 6.

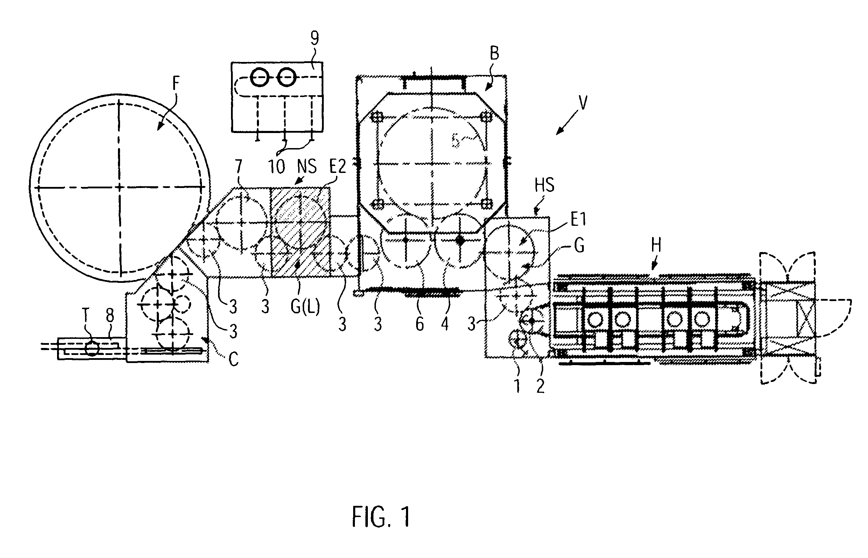

Fig. 1 zeigt eine Vorrichtung V zum Blasformen oder Streckblasformen und Füllen steriler Behälter T. Einer Heizvorrichtung H werden Vorformlinge aus thermoplastischem Material über einen Transportstern 1 zugeführt. Die Vorformlinge werden von diesem Transferstern 1 in die Heizvorrichtung H eingebracht und in dieser mit einem vorbestimmten Temperaturprofil versehen, ehe sie nachfolgend über einen Transferstern 3 an ein Hauptsterilisationsmodul HS gebracht werden, in welchem an den Vorformlingen ein Hauptsterilisierungsvorgang durchgeführt wird. Der Hauptsterilisationsmodul HS ist zwischengeschaltet zwischen der Transportvorrichtung 3 und einer weiteren Transportvorrichtung 4 eines Blasmoduls B, in welchem ein Blasrotor 5 mit nicht gezeigten Blasformen angeordnet ist. Wie durch die ausgezogenen Umrisse des Blasmoduls B angedeutet, kann sich der Blasmodul B zumindest im Bereich des Blasrotors 5 in einer Reinraum-Umgebung befinden. Die blasgeformten oder streckblasgeformten Behälter T werden über eine weitere Transportvorrichtung 6 an eine Transportvorrichtung 3 übergeben, die in einen zwischen die Transportvorrichtung 3 und eine Füllmaschine F zwischengeschalteten Nachsterilisationsmodul NS gebracht werden. An den Nachsterilisationsmodul NS kann sich eine weitere Transportvorrichtung 7 oder eine Spül- und/oder Trockenstation anschließen, von der die sterilen Behälter über eine Transportvorrichtung 3 in die Füllmaschine F gebracht werden. Ausgangs der Füllmaschine F bringt eine weitere Transportvorrichtung 3 die gefüllten Behälter in einen Verschließer C, in dem auf die Behälter T sterile Verschlüsse aufgebracht werden, und der an eine Ausgabefördervorrichtung 8 angeschlossen ist. In dem Hauptsterilisationsmodul HS und dem Nachsterilisationsmodul NS ist jeweils ein Behandlungsstern E1, E2 enthalten. Die Hauptsterilisationsbehandlung und die Nachsterilisationsbehandlung in den Modulen HS und NS wird in der Ausführungsform in Fig. 1 beispielsweise mit einem durch eine thermische Vorbehandlung gasförmigen Medium G durchgeführt, beispielsweise Wasserstoffperoxid, das mit hoher Temperatur und unter Druck appliziert wird. Alternativ ist für den Nachsterilisationsmodul NS durch das Bezugszeichen L angedeutet, dass dort die Nachsterilisationsbehandlung mit einem flüssigen Medium wie beispielsweise auf der Basis von Peressigsäure gearbeitet wird. Teil der Vorrichtung V kann ferner eine an eine Versorgung (nicht gezeigt) angeschlossene Ventilanordnung 9 sein, die das jeweils eingesetzte Medium G oder L unter Druck bereitstellt, und von der Anschlussleitungen 10 zu den Modulen HS und NS führen.

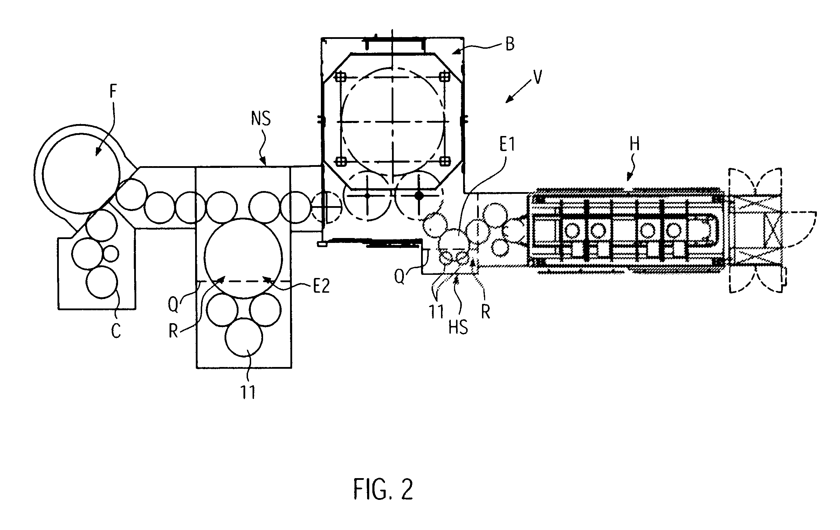

Die Ausführungsform der Vorrichtung in Fig. 2 unterscheidet sich von der von Fig. 1 dadurch, dass der Hauptsterilisationsmodul HS wie auch der Nachsterilisationsmodul NS mit Energiestrahlen R bei der jeweiligen Sterilisationsbehandlung der Vorformlinge und der Behälter arbeiten, und zwar mit zumindest jeweils einem Generator 11 für Energiestrahlen, wobei, zweckmäßig, zumindest die Generatoren 11 jeweils in einer abgeschirmten Strahlenschleuse Q angeordnet sind.

Bei einer nicht gezeigten Alternative der Ausführungsform von Fig. 2 könnte als Nachsterilisationsmodul NS der mit dem gasförmigen Medium G arbeitende Nachsterilisationsmodul NS von Fig. 1 vorgesehen sein.

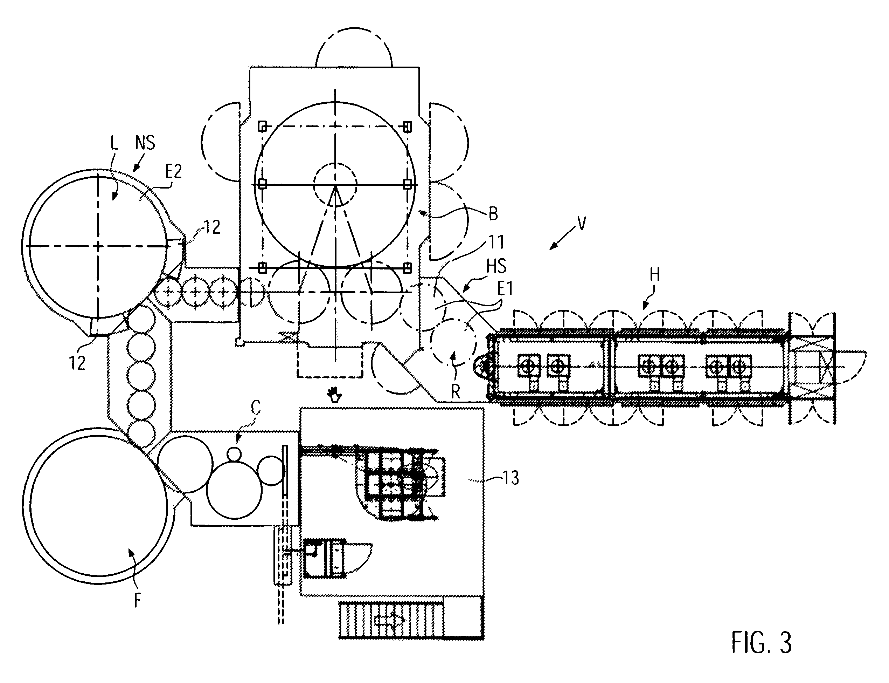

Die Ausführungsform der Vorrichtung V in Fig. 3 unterscheidet sich von den vorhergehenden Ausführungsformen u.a. dadurch, dass die Transportstrecken zwischen dem Blasmodul B und dem Nachsterilisationsmodul NS sowie zur Füllmaschine F länger sind. Zwischen der Heizvorrichtung H und dem Blasmodul B arbeitet der Hauptsterilisationsmodul mit dem Bearbeitungsstern E1 mit Energiestrahlen R von zumindest einem Generator 11. Gegebenenfalls ist der Generator 11 neben dem Bearbeitungsstern E1 vorgesehen oder in diesen integriert. Der Nachsterilisationsmodul NS in Fig. 3 arbeitet mit flüssigem Medium L (mit Druck-Heiß-Spülung) und enthält aus diesem Grund einen größeren Behandlungsstern E2 und Wendevorrichtungen 12, um die Behälter zu wenden. Dem Verschließer C ist ein eigener Raum 13 vorgesetzt, in dem Verschlüsse bereitgehalten und gegebenenfalls sterilisiert werden. Das in dem Nachsterilisationsmodul verarbeitete flüssige Medium L ist beispielsweise Peressigsäure. Der Nachsterilisationsmodul NS arbeitet z.B. als Behälterspülmaschine.

In den Ausführungsformen der Vorrichtung V in den Fig. 1 bis 3 können alle in den Modulen HS, NS verwendeten Behandlungssterne E1, E2 ohne Hubsteuerungen praktisch nur in der Drehebene arbeiten.

Bei einer alternativen, nicht gezeigten Ausführungsform könnte die Vorrichtung V von Fig. 1 anstelle des Nachsterilisationsmoduls NS mit dem gasförmigen Medium G den Nachsterilisationsmodul NS von Fig. 3 mit dem flüssigen Medium L enthalten. Im Übrigen sind zwei oder mehrere Behandlungssterne E1, E2 im einen und/oder anderen Behandlungsmodul HS, NS denkbar.

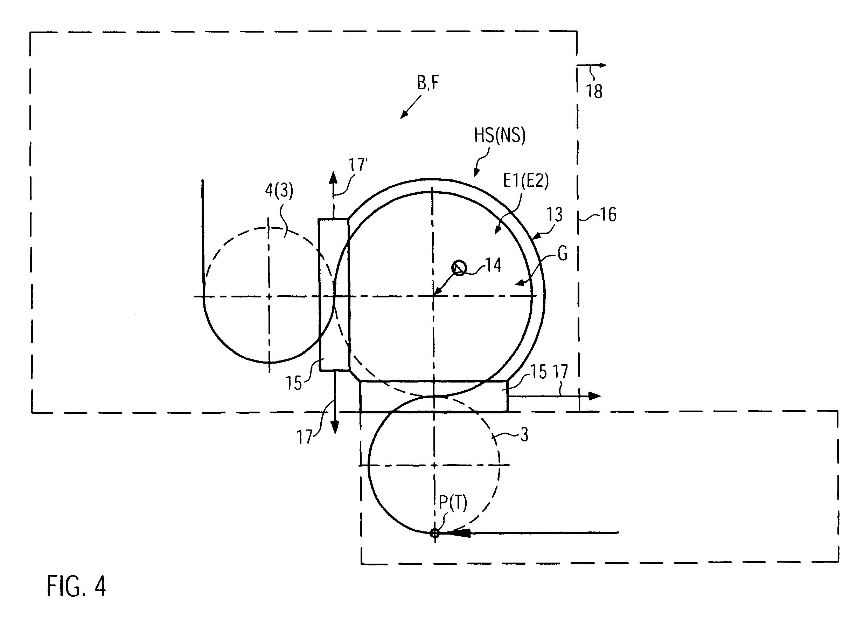

Fig. 4 verdeutlicht ein Belüftungssystem beispielsweise für den Hauptsterilisationsmodul HS (oder den Nachsterilisationsmodul NS, alternativ oder additiv), beispielsweise für die Ausführungsform der Vorrichtung von Fig. 1, in der mit gasförmigem Medium G, wie Wasserstoffperoxid, sterilisiert wird. Der Behandlungsstern E1 ist in einer ihn umschließenden Behandlungskammer 13 angeordnet, die Abluftkästen 15 in den Übergangsbereichen von der Transportvorrichtung 3 für die Vorformlinge P (oder die Behälter T) und zur Transportvorrichtung 3 oder 4 aufweist, die eine schleusenartige Wirkung erzeugen. Die Behandlungskammer 13 ist an eine Quelle 14 für beispielsweise Sterilluft angeschlossen, die permanent in die Behandlungskammer 13 eingeführt wird. Die Behandlungskammer 13 befindet sich in der durch gestrichelte Linien angedeuteten Reinraum-Umgebung 16, an die eine Absaugung 18 angeschlossen sein kann. Von den Abluftkästen 15 führen Abluftabführungen 17 unter Umgehung der Reinraum-Umgebung 16 nach außen. Gegebenenfalls sind Absaugvorrichtungen oder Ventileinrichtungen vorgesehen, um die Abluftströme individuell steuern zu können. Alternativ ist bei 17' gestrichelt eine Abluftführung von einem Abluftkasten 15 in die Reinraum-Umgebung 16 angedeutet.

Die Reinraum-Umgebung 16 könnte zum Blasmodul B gehören und zumindest den Blasrotor 5 umgeben. In die Reinraum-Umgebung 16 könnte gefilterte reine oder sogar Sterilluft eingeführt werden, beispielsweise durch ein Gebläse. Die Absaugung über die Abluftabführungen 17 empfiehlt sich dann, wenn in der Behandlungskammer 13 mit einem aggressiven Medium gearbeitet wird, das nicht in die Reinraum-Umgebung 16 gelangen sollte, da dort Teile z.B. des Blasrotors beschädigt werden könnten. Dafür sorgen die Abluftkästen 15, aus denen die Abluft nach außen abgesaugt werden kann. Um eine Querströmung in der Behandlungskammer 13 zu vermeiden, kann es zweckmäßig sein, die Abluftströme beispielsweise über verstellbare Klappenventile (nicht gezeigt) zu steuern.

In die Behandlungskammer 13 wird beispielsweise Reinluft mittels Düsen eingebracht (z.B. 80 Nm³/h. Die Absaugung über die Abluftabführungen 17 werden so eingestellt, dass in der Behandlungskammer 75 ein Unterdruck entsteht. In der Reinraum-Umgebung 16 kann dadurch ein resultierender Überdruck eingestellt sein.

Ein ähnliches Belüftungsprinzip kann, wie erwähnt, auch bei dem Nachsterilisationsmodul NS angewandt werden, wobei sich an die Reinraum-Umgebung 16 dann ein weiterer über einen Durchgang zugängiger Reinraum der Füllmaschine F anschließen kann, in welchem ein noch höherer Druck von beispielsweise 20 Pa herrscht, weil die hygienischen Anforderungen beim Füllen noch höher sind als im Blasmodul B.

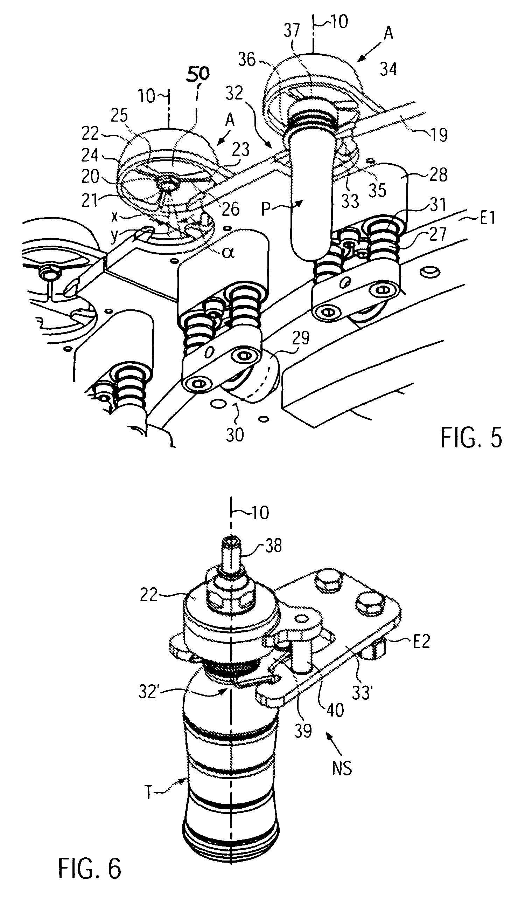

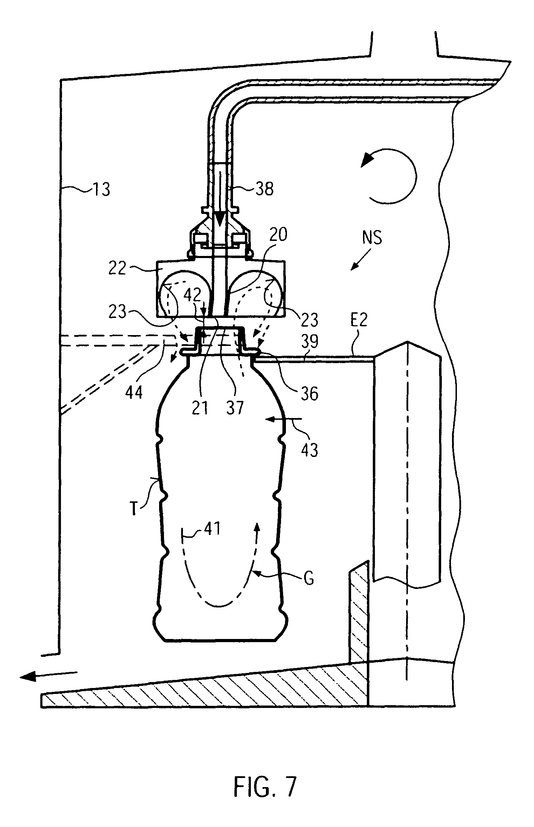

Fig. 5 verdeutlicht ein Detail des Behandlungssterns E1 des Hauptsterilisationsmoduls HS, beispielsweise der Vorrichtung V von Fig. 1. An dem Behandlungsstern E1, der um eine z.B. vertikale Achse drehantreibbar ist, ist ein ringförmiger Stützstern 19 montiert, der entlang des Außenumfanges in regelmäßigen Abständen Applikationseinrichtungen A zum Applizieren des gasförmigen Mediums G aufweist. Jede Applikationseinrichtung A weist eine in etwa vertikal stehende Düse 20 auf, die an die Verbindungsleitung 10 zur Ventileinrichtung 9 von Fig. 1 angeschlossen ist, zweckmäßig über einen zentralen Verteiler oberhalb des Behandlungssterns E1. Eine Düsenöffnung 21 der Düse 20 mit einer Achse X ist im Wesentlichen zentrisch zu einer Fixierung 32 für den jeweiligen Vorformling P, dabei jedoch seitlich schräg gegenüber der Achse Y des Vorformlings P orientiert. Die Achsen X und Y schließen einen sehr spitzen Winkel α ein. Die Düse 20 ist in einem Glockenkörper 22 angeordnet, der mit seiner offenen Unterseite auf einer Tragplatte 24 angeordnet ist, die, zweckmäßig austauschbar, an wenigstens einem Führungselement 27 befestigt ist. Die Tragplatte 24 (oder die offene Unterseite des Glockenkörpers 22) enthält mehrere in Umfangsrichtung verteilte, schmale Auflagestreben 25, zwischen denen weite Durchströmpassagen 50 definiert werden, die zum Inneren des Glockenkörpers 22 und zu dort vorgesehenen Umlenkflächen 23 führen. Die Form der Umlenkflächen ist beispielsweise konkav gerundet, entsprechend Fig. 7, um eine durch die Durchströmpassagen 27 relativ zentral um die Düse 20 eintretende Strömung umzulenken und wieder durch die Durchströmpassagen 27 nach unten auf den Mündungsbereich des Vorformlings P zu richten. Zweckmäßig weichen die Unterseiten 26 der Auflagestreben 25 allmählich schräg nach oben zum Inneren des Glockenkörpers 22 zurück, so dass die Düse 20 bzw. die Düsenöffnung 21 gegenüber den Auflagestreben 25 vorsteht. Da der Außendurchmesser der Unterseite des Glockenkörpers 22 erheblich größer ist als der Außendurchmesser einer Mündung 37 des Vorformlings P, lässt sich der Glockenkörper 22 so auf die Mündung 37 aufsetzen, dass die Düsenöffnung 21 etwas in die Mündung 37 eintritt und die Außenränder der Durchstromöffnungen 27 unterhalb der Ebene der Mündung 37 zu liegen kommen.

Das Führungselement 27 (zweckmäßig ein Paar Führungselemente 27) ist in einer Schiebeführung 28 an der Unterseite des Stützsterns 19 vertikal verschiebbar geführt und trägt am unteren Ende eine Tastrolle 29, die bei der Relativdrehung des Behandlungssterns E1 phasenweise mit einer gestrichelt angedeuteten Kurvensteuerung 30 zusammenwirkt, um den Glockenkörper 22 entweder wie gezeigt abzusenken oder in eine von der Mündung 37 abgehobene Position zu stellen. Zweckmäßig wird das Führungselement 27 bzw. die Tastrolle 29 durch eine Feder 31 in Absenkrichtung des Glockenkörpers 22 auf die Mündung 37 beaufschlagt, um den jeweiligen Vorformling P in der Fixierung 32 festzuspannen. Die Fixierung 32 ist beispielsweise in einer auf dem Stützstern 19 austauschbar montierten Platte 33 vorgesehen und maulförmig mit mehreren Auflagefingern 34 ausgebildet, zwischen denen großzügige Durchströmpassagen 35 zu einem darunterliegenden Freiraum definiert sind. Der Vorformling P liegt auf den Auflagefingern 34 mit einem Tragring 36 unterhalb der Mündung 37 auf und wird durch den von der Feder 31 aufgepressten Glockenkörper 22 in etwa zentrisch zum Glockenkörper 22 festgespannt, während das gasförmige Medium G durch die Düse 20 in den Vorformling P eingeblasen wird.

Dank der Schräglage der Düsenöffnung 21 in Bezug auf die Achse Y des Vorformlings P wird das gasförmige Medium G intensiv und in einer spiralförmigen Strömungsführung über die Innenwand des Vorformlings P zirkuliert, ehe es nach oben aus der Mündung 37 austritt, an den Umlenkflächen 23 umgelenkt wird, und dann auch den Außenbereich des Vorformlings P bis zum Tragring 36 oder sogar darunter beaufschlagt.

Fig. 6 zeigt eine ähnliche Struktur für den Behandlungsstern E2 in dem Nachsterilisationsmodul, beispielsweise falls mit gasförmigem Medium G gearbeitet wird (alternativ mit einer Heißspülung). Der Glockenkörper 22 ist hier stationär über Stützsäulen 40 auf einer Platte 33' montiert, die am Behandlungsstern E2 austauschbar montiert sein kann. Als Fixierung 32' für den Behälter T dient ein Klammergreifer 39 an der Tragplatte 33'. Am Glockenkörper 22 ist oben ein Anschluss 38 für die Verbindungsleitung 10 angeordnet.

In Fig. 7 ist der Behandlungsstern E2 in der Behandlungskammer 13 angeordnet, in der er sich um seine angedeutete Mittelachse dreht. Der Glockenkörper 22 ist so an den Stützsäulen 40 montiert, dass seine offene Unterseite wie auch die schräggestellte Düsenöffnung 21 der mittigen Düse 20 der Mündung 37 des Behälters T (der Mündungsbereich mit der Mündung 37 und dem Tragring 36 ist beim Blasformen nicht mehr nennenswert gegenüber der Ausbildung beim Vorformling P verändert worden) mit einem Manipulationsabstand 42 gegenüberliegt, um den Behälter T mit einer im Wesentlichen nur seitlich verlaufenden Bewegung (Pfeil 43) in den Klammergreifer 39 einzubringen oder aus diesem zu entnehmen. Fig. 7 zeigt einen Strömungsverlauf 41 des gasförmigen Mediums G, induziert durch die Düse 20 und die schräggestellte Düsenöffnung 21. Die Strömung verläuft zunächst gerichtet an einer Seite entlang der Innenwandung und des Bodens des Behälters T, ehe sie nach oben aus der Mündung 37 austritt und an den Umlenkflächen 23 im Glockenkörper so umgelenkt wird, dass auch der Außenbereich des Mündungsbereiches des Behälters T beaufschlagt wird.

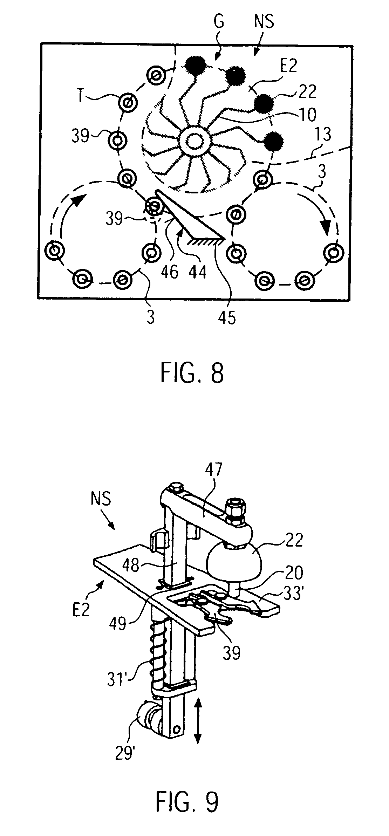

Um Störungen bei der Übergabe des Behälters T an die Transportvorrichtung (z.B. die Transportvorrichtung 3) zu verhindern, kann im Übergabebereich ein Ausleitfinger 44 (siehe auch Fig. 8) vorgesehen sein, der in Fig. 7 oberhalb des Tragrings 36 bzw. des Klammergreifers 39 am Behälter T angreift, um diesen in Richtung des Pfeiles 43 zu transferieren. Alternativ (nicht gezeigt) könnte der Ableitfinger unterhalb des Klammergreifers 39 angeordnet sein.

Gemäß Fig. 8 ist der Ableitfinger 44 in dem Nachsterilisationsmodul NS stationär und derart in den Übergabebereich von dem Behandlungsstern E2 so der Transportvorrichtung 3 angeordnet, dass er an der der Transportvorrichtung 3 abgewandten Hinterseite des Behälters T angreift und diesen aus dem Klammergreifer 39 in beispielsweise einen Klammergreifer 39 der Transportvorrichtung 3 schiebt. Der Ableitfinger 44 ist in einer Lagerung 45 stationär montiert und weist eine schräg zur Bewegungsbahn des Behälters T an dem Behandlungsstern E2 angeordnete Ableitfläche 46 auf.

Der Ableitfinger 44 könnte auch bei dem Behandlungsstern E1 des Hauptsterilisationsmoduls HS verwendet werden, um dort den Vorformling P ohne schädliche Berührung mit anderen Komponenten mit hoher Sicherheit zu transferieren. Der Ableitfinger 44 ist nur eine aus Sicherheitsgründen zweckmäßige Option, jedoch keine Notwendigkeit.

Fig. 9 zeigt schließlich eine Detailvariante des Behandlungssterns E2 des Nachsterilisationsmoduls NS. Der Glockenkörper 22 ist hier mittels einer Hubsteuerung 47, 48, 29', 31' relativ zum Klammergreifer 39 auf- und abverstellbar. Die Düse 20 steht deutlich aus dem Glockenkörper 22 vor. Die Hubsteuerung besteht aus einem Ausleger 47, an welchem der Glockenkörper 22 und die Düse 20 montiert sind, einem Vertikalführungselement 48 und einer Tastrolle 29' zur Zusammenarbeit mit einer Kurvensteuerung. Gegebenenfalls wird die Hubsteuerung durch eine Feder 31' in Absenkrichtung beaufschlagt, um den abgesenkten Glockenkörper 22 auf die Mündung des Behälters T zu pressen. Das Führungselement 48 ist in einer Schiebeführung 49 der Platte 33' verschiebbar. Die Ausführungsform der Fig. 9 kann als alternative Ausführungsform von Fig. 6 angesehen werden, und auch in Verbindung mit dem Ableitfinger 44 von Fig. 7 verwendet werden.

## Patentansprüche

1. Verfahren zum Blasformen oder Streckblasformen und Füllen steriler Behälter (T) aus Vorformlingen (P), insbesondere Kunststoffflaschen, in einer in einem Blasmodul (B) Blasformen aufweisenden Behälterbehandlungsmaschine (V), bei dem die Vorformlinge (P) aus einer Heizvorrichtung (H) über Transportvorrichtungen (3, 4) in die Blasformen transferiert, in den Blasformen zu den Behältern (T) geformt und die Behälter aus den Blasformen zu einer Füllmaschine (F) transportiert und gefüllt werden, wobei an den Vorformlingen (P) und den Behältern (T) je eine Sterilisationsbehandlung vorgenommen wird, **dadurch gekennzeichnet, dass** an den Vorformlingen (P) zwischen der Heizvorrichtung (H) und dem Blasmodul (B) eine Hauptsterilisationsbehandlung zum Erzielen praktisch steriler Vorformlinge (P) und an den Behältern (T) im Transportweg zu der Füllmaschine (F) nur mehr sicherheitshalber eine Nachsterilisationsbehandlung mit kurzer Verweilzeit vorgenommen werden.

2. Verfahren nach Anspruch 1, **dadurch gekennzeichnet, dass** die Hauptsterilisationsbehandlung mit einem gasförmigen Medium (G), vorzugsweise thermisch aufbereitetem Wasserstoffperoxid, und die Nachsterilisationsbehandlung mit einem gasförmigen Medium (G), vorzugsweise thermisch aufbereitetem Wasserstoffperoxid, und/oder einem flüssigen Medium (L), vorzugsweise auf Peressigsäure-Basis, durchgeführt werden.

3. Verfahren nach Anspruch 1, **dadurch gekennzeichnet, dass** die Hauptsterilisationsbehandlung mit Elektronenstrahlen (R) und die Nachsterilisationsbehandlung mit Elektronenstrahlen (R) und/oder einem gasförmigen Medium (G) und/oder einem flüssigen Medium (L) durchgeführt werden.

4. Verfahren nach wenigstens einem der vorhergehenden Ansprüche, **dadurch gekennzeichnet, dass** zumindest die Hauptsterilisationsbehandlung in einer Reinraum-Umgebung (16) durchgeführt wird, vorzugsweise unter höherem Reinraumdruck als dem Druck im Bereich der Transportvorrichtung.

5. Verfahren nach wenigstens einem der vorhergehenden Ansprüche, **dadurch gekennzeichnet, dass** zumindest die Hauptsterilisationsbehandlung an einem Behandlungsstern (E1) in einer den Behandlungsstern (E1) bis auf Übergabebereiche umschließenden, vorzugsweise in einer Reinraum-Umgebung (16) angeordneten, Behandlungskammer (13) ausgeführt wird, dass in die Behandlungskammer (13) permanent eine Sterilluft-Strömung eingeführt wird, und dass, vorzugsweise, Abluft aus der Behandlungskammer (13) über die Übergabebereiche umgebende Abluftkästen (15) abgeblasen oder abgesaugt wird.

6. Verfahren nach wenigstens einem der vorhergehenden Ansprüche, **dadurch gekennzeichnet, dass** Luft aus der Behandlungskammer (13) unter Umgehung der Reinraum-Umgebung (16) nach außen abgeführt wird.

7. Vorrichtung zum Blasformen oder Streckblasformen und Füllen steriler Behälter (T) aus Vorformlingen (P) in einer in einem Blasmodul (B) Blasformen aufweisenden Behälterbehandlungsvorrichtung (V), mit einer dem Blasmodul vorgeschalteten Heizvorrichtung (H) für die Vorformlinge (P), die mit Transportvorrichtungen (3, 4) in die Blasformen transferierbar und in den Blasformen zu den Behältern (T) formbar sind, ehe die Behälter (T) zu einer Füllmaschine (F) transportiert und gefüllt werden, und mit Sterilisationsbehandlungsmodulen für die Vorformlinge (P) und die Behälter (T), **dadurch gekennzeichnet, dass** zwischen der Heizvorrichtung (H) und dem Blasmodul (B) ein Hauptsterilisationsmodul (HS) für die Vorformlinge (P) zum Erzielen praktisch steriler Vorformlinge (P) und zwischen dem Blasmodul (B) und der Füllmaschine (F) ein Nachsterilisationsmodul (NS) zur sicherheitshalben Nachsterilisation mit kurzer Verweilzeit für die Behälter (T) vorgesehen sind.

8. Vorrichtung nach Anspruch 7, **dadurch gekennzeichnet, dass** der Hauptsterilisationsmodul (HS) im Transportweg der Vorformlinge (P) zwischen einer Vorformlinge (P) aus der Heizvorrichtung (H) liefernden Transportvorrichtung (3) und einer die Vorformlinge in den Blasmodul transferierenden Transportvorrichtung (4) und der Nachsterilisationsmodul (NS) im Transportweg der Behälter (T) zwischen eine die Behälter (T) aus dem Blasmodul (B) entnehmenden Transportvorrichtung (6, 3) und eine die Behälter in die Füllmaschine (F) transferierenden Transportvorrichtung (3, 7) jeweils zwischengeschaltet sind.

9. Vorrichtung nach Anspruch 7, **dadurch gekennzeichnet, dass** der Hauptsterilisationsmodul (HS) und der Nachsterilisationsmodul (NS) jeweils mindestens einen Behandlungsstern (E1, E2) und entweder Zufuhr- und Applikationseinrichtungen (A) für ein gasförmiges und/oder flüssiges Medium (G, L) oder wenigstens einen Elektronenstrahl-Generator (11) zum Aufbringen von Elektronenstrahlen (R) auf und/oder in die Vorformlinge (P) bzw. die Behälter (T) aufweist.

10. Vorrichtung nach Anspruch 9, **dadurch gekennzeichnet, dass** der Behandlungsstern (E1, E2) in einer an eine Belüftungsquelle (14) angeschlossenen Behandlungskammer (13) mit Zufuhr- und Abfuhr-Übergangsbereichen abdeckenden Abluftkästen (15) angeordnet ist, und dass, vorzugsweise, die Behandlungskammer (13) und die Abluftkästen (15) in einer Reinraum-Umgebung (16) des Blasmoduls (B) oder der Füllmaschine (F) angeordnet sind.

11. Vorrichtung nach Anspruch 9, **dadurch gekennzeichnet, dass** die Abluftkästen (15) einstellbare Abluftventile, vorzugsweise Klappenventile, aufweisen, und, vorzugsweise, an eine die Reinraum-Umgebung (16) nach außen umgehende Abluftabführung (17) angeschlossen sind.

12. Vorrichtung nach Anspruch 9, **dadurch gekennzeichnet, dass** die Applikationseinrichtung (A) für das gasförmige und/oder flüssige Medium (G, L) jeweils einen unterseitig offenen, am Behandlungsstern (E1, E2) angeordneten Glockenkörper (22) mit innenliegenden Umlenkflächen (23) zur Außenbehandlung des Vorformlings (P) bzw. des Behälters (T) und einer mittigen Düse (20) aufweisen, die eine gegenüber der Achse des Vorformlings (P) oder des Behälters (T) zur Seite schräg gestellte Düsenöffnung (21) besitzt.

13. Vorrichtung nach Anspruch 12, **dadurch gekennzeichnet, dass** der Glockenkörper (22) an einer Hubsteuervorrichtung (29', 48, 47) des Behandlungsstern (E1, E2) relativ zu einer Fixierung (39, 34) für den Vorformling (P) oder den Behälter (T) anhebbar und absenkbar angeordnet ist.

14. Vorrichtung nach Anspruch 12, **dadurch gekennzeichnet, dass** der Glockenkörper (22) in dem Nachsterilisationsmodul (NS) an dem Behandlungsstern (E2) auf eine Fixierung (39) für den Behälter (T) ausgerichtet und derart stationär montiert ist, dass zwischen der Mündung (37) des Behälters (T) und der Unterseite des Glockenkörpers (22) und der Düsenöffnung (21) ein seitlich offener Behälter-Manipulationsspalt (42) gebildet wird.

15. Vorrichtung nach Anspruch 13 oder 14, **dadurch gekennzeichnet, dass** die Fixierung (39) ein unter einem Tragring (36) des Behälters (T) zum Angriff bringbarer Klammergreifer ist, und dass an zumindest einem Übergabebereich vom Behandlungsstern (E2) zu einer zugeordneten Transportvorrichtung (3) ein stationärer Ausleitfinger (44) unterhalb oder oberhalb der Bewegungsbahn des Klammergreifers montiert ist, der sich schräg gegenüber der Bewegungsbahn des im Klammergreifer angeordneten Behälters (T) im Behandlungsstern (E2) erstreckt und gegen die der Transportvorrichtung (3) abgewandte Seite des Behälters (T) benachbart zum Tragring (36) zum Ausleitangriff bringbar ist.

16. Vorrichtung nach Anspruch 12 oder 13, **dadurch gekennzeichnet, dass** jeder Glockenkörper (22) in dem Hauptsterilisationsmodul (HS) in der offenen Unterseite mehrere schmale Auflagestreben (25) aufweist oder mit der offenen Unterseite auf einer austauschbar montierten Platte (24) angebracht ist, die die Auflagestreben (25) enthält, und dass zwischen den Auflagestreben (25) mehrere breitere Durchströmpassagen (50) zu und von den Umlenkflächen (23) im Glockenkörper (22) definiert sind, wobei, vorzugsweise, sich die Auflagestreben (25) von einem Umfangsrand allmählich zurückweichend zu der Düse (20) erstrecken und die Düsenöffnung (21) gegenüber den Auflagestreben (25) nach unten vorspringt.

17. Vorrichtung nach Anspruch 13, **dadurch gekennzeichnet, dass** die Fixierung (32) für den Vorformling (P) am Behandlungsstern (E1), vorzugsweise an einer austauschbar angeordneten Tragplatte (33), mehrere Tragfinger (34) für den Vorformlings-Tragring (36) aufweist, zwischen denen Durchströmpassagen (35) zu einem darunterliegenden Freiraum definiert sind, und dass die Hubsteuervorrichtung zumindest ein den Glockenkörper (22) tragendes Führungselement (27) aufweist, das im Behandlungsstern (E1) verschiebbar geführt und über eine Tastrolle (29) durch eine Kurvensteuerung (30) im Wesentlichen parallel zur Achse des Vorformlings (P) verschiebbar ist, wobei, vorzugsweise, das Führungselement (27) oder die Tastrolle (29) in Aufsetzrichtung des Glockenkörpers (22) mit den Auflagestreben (25) auf die Mündung (37) des mit dem Tragring (36) auf den Tragfingern (34) aufliegenden Vorformlings (P) durch eine Vorformlings-Fixierfeder (31) beaufschlagt ist.

18. Vorrichtung nach Anspruch 9, **dadurch gekennzeichnet, dass** zumindest der Elektronenstrahl-Generator (11) im Hauptsterilisationsmodul (HS) und im Nachsterilisationsmodul (NS) in einer abgeschirmten Strahlungsschleuse (Q) angeordnet ist.

## Claims

1. Method for blow moulding or stretch moulding of sterile containers (T) from preforms (P) and filling the containers (T), in particular plastic bottles, in a container treatment machine (V) having blow moulds in a blow module (B), comprising transferring the preforms (P) from a heating device (H) by transport devices (3, 4) into the blow moulds, shaping the preforms (P) into the containers (T) in the blow moulds, and transporting the containers (T) from the blow moulds to a filling machine (F) and filling them, wherein a sterilisation treatment is performed at the preforms (P) and at the containers (T), **characterised in that** between the heating device (H) and the blow module (B), a main sterilisation treatment is performed at the preforms (P) for achieving practically sterile preforms (P), and that on the transport path to the filling machine (F), only as a precaution a post-sterilisation treatment with short residence time is performed at the containers (T).

2. Method according to claim 1, **characterised in that** the main sterilisation treatment is performed with a gaseous medium (G), preferably with thermally processed hydrogen peroxide, and that the post-sterilisation treatment is performed with a gaseous medium (G), preferably thermally processed hydrogen peroxide, and/or a liquid medium (L), preferably on the basis of peracetic acid.

3. Method according to claim 1, **characterised in that** the main sterilisation treatment is performed with electron beams (R), and the post-sterilisation treatment is performed with electron beams (R) and/or a gaseous medium (G) and/or a liquid medium (L).

4. Method according to at least one of the preceding claims, **characterised in that** at least the main sterilisation treatment is performed in a clean room environment (16), preferably under a higher clean room pressure than the pressure in the region of the transport device.

5. Method according to at least one of the preceding claims, **characterised in that** at least the main sterilisation treatment is performed at a treatment star (E1) in a treatment chamber (13) enclosing the treatment star (E1) downward to transfer regions, the treatment chamber (13), preferably, being arranged in a clean room environment (16), that a sterile air flow is permanently introduced into the treatment chamber (13), and that, preferably, exhaust air from the treatment chamber (13) is blown off or sucked off via exhaust air boxes (15) surrounding the transfer regions.

6. Method according to at least one of the preceding claims, **characterised in that** air is discharged from the treatment chamber (13) to the outside by bypassing the clean room environment (16).

7. Device for blow moulding or stretch blow moulding sterile containers (T) from preforms and filling the containers (T) in a container treatment machine (V) having blow moulds in a blow module (B), comprising a preform heating device (H) preceding the blow module (B), which preforms (P) can be transferred into the blow moulds with transport devices (3, 4) and shaped to the containers (T) in the blow moulds before the containers (T) are transported to a filling machine (F) and filled, and respective sterilisation treatment modules for the preforms (P) and for the containers (T), **characterised in that** for achieving practically sterile preforms (P) a main sterilisation module (HS) for the preforms (P) is provided between the heating device (H) and the blow module (B), and that for a precautionary post-sterilisation of the containers (T) with short residence time a post-sterilisation module (NS) is provided for the containers (T) between the blow module (B) and the filling machine (F).

8. Device according to claim 7, **characterised in that** the main sterilisation module (HS) is arranged in the transport path between a preform transport device (3) supplying the preforms (P) from the heating device (H), and a transport device (4) transferring the supplied preforms (P) into the blow module (B), and that the post-sterilisation module (NS) is arranged in the transport path of the containers (T) between a transport device (6, 3) removing the containers (T) from the blow module (B) and a transport device (3, 7) transferring the removed containers into the filling machine (F).

9. Device according to claim 7, **characterised in that** the main sterilisation module (HS) and the post-sterilisation module (NS) each comprise at least one treatment star (E1, E2) and either supply and application assemblies (A) for a gaseous and/or liquid medium (G, L), or at least one electron beam generator (11) for applying electron beams (R) onto and/or into the preforms (P) or the containers (T), respectively.

10. Device according to claim 9, **characterised in that** the treatment star (E1, E2) is arranged in a treatment chamber (13) have exhaust air boxes (15) covering supply and transfer transitional areas, the treatment chamber being connected to an aeration source (14), and that, preferably, the treatment chamber (13) and the exhaust air boxes (15) are arranged in a clean room environment (16) of the blow module (B) or of the filling machine (F).

11. Device according to claim 9, **characterised in that** the exhaust air boxes (15) comprise adjustable exhaust air valves, preferably flap valves, and are, preferably, connected to an exhaust air discharge (17) bypassing the clean room environment (16) to the outside.

12. Device according to claim 9, **characterised in that** the application assemblies (A) for the gaseous and/or the liquid medium (G, L) each comprise at the treatment star (E1, E2) a bell body (22) being open at a lower side and having internal baffle surfaces (23) for an external treatment of the preform (P) or of the container (T), respectively, and a central nozzle (20), having a nozzle opening (21) which is inclined sidewards relative to the axis of the preform (P) or of the container (T).

13. Device according to claim 12, **characterised in that** the bell body (22) is arranged relative to a fixation (29, 34) for the preform (P) or the container (T) at a lifting control device (29', 48, 47) of the treatment star (E1, E2) to be lifted and lowered.

14. Device according to claim 12, **characterised in that** the bell body (22) is stationarily mounted at the treatment star (E2) in the post-sterilisation module (NS) in alignment with a fixation (39) for a container (T) such that a lateral open container manipulation gap (42) is formed between the mouth (37) of the respective container (T) and both the open lower side of the bell body (22) and the nozzle opening (21).

15. Device according to claim 13 or 14, **characterised in that** the fixation (39) is a clamp gripper that can be applied under a supporting ring (36) of the container (T), and that at at least one transfer region from the treatment star (E2) to an allocated transport device (3), a stationary deflecting finger (44) is mounted underneath or above the motion path of the clamp gripper, the deflecting finger (44) extending obliquely relative to the motion path of a container (T) in the treatment star (E2) and held in the clamp gripper, and that the deflection finger (44) can be brought into a deflecting engagement adjacent to the supporting ring (36) and at a side of the container (T) facing away from the transport device (3).

16. Device according to claim 12 or 13, **characterised in that** in the main sterilisation module (HS) each bell body (22) either comprises several slim bearing struts (25) in the open bottom side or is attached with the open lower side to an exchangeably mounted plate (24) containing slim bearing struts (25), and that several wide through flow passages (50) to and from the baffle surfaces (23) of the bell body (22) are defined between the bearing struts (25), wherein, preferably, the bearing struts (25) extend gradually receding upwards from a peripheral bell body edge towards the nozzle (20) such that the nozzle opening (21) protrudes downwards relative to the bearing struts (25).

17. Device according to claim 13, **characterised in that** the preform fixation (32) at the treatment star (E1) comprises several preform supporting fingers (34) for engagement at a preform supporting ring (36), the fingers (34), preferably, being arranged at an exchangeably arranged support plate (33) with through flow passages (35) defined between the fingers (34), the through flow passages (35) leading into a free space located underneath, and that the lifting control device comprises at least one guide element (27) carrying the bell body (22), which guide element (27) is movably guided in the treatment star (E1) and can be shifted essentially parallel to the axis of the preform (P) via a cam follower roller (29) and a cam control (30), wherein, preferably, a preform fixing spring (31) engages in a set-down direction of the bell body (22) with the bearing struts (25) on the mouth (37) of the preform (P) either at the guide element (27) or at the cam follower roller (29) while the preform (P) is resting with the supporting ring (36) on the supporting fingers (34).

18. Device according to claim 9, **characterised in that** at least the respective electron beam generator (11) arranged in the main sterilisation module (HS) and in the subsequent sterilisation module (NS) is situated in a shielded radiation maze (Q).

## Revendications

1. Procédé de moulage par soufflage ou par étirage-soufflage et de remplissage de récipients stériles (T) obtenus à partir de préformes (P), en particulier de bouteilles en plastique, dans une machine de traitement de récipients (V) comportant des formes de soufflage dans un module de soufflage (B) où les préformes (P) sont transférées par des installations de transport (3, 4) d'un dispositif de chauffe (H) dans les formes de soufflage, puis formées en récipients (T) dans les formes de soufflage, et les récipients sont transportés hors des formes de soufflage vers une machine de remplissage (F) et remplis, dans lequel un traitement de stérilisation est mis en oeuvre pour chaque préforme (P) et chaque récipient (T), **caractérisé en ce qu'**un traitement de stérilisation principal est mis en oeuvre sur les préformes (P), entre le dispositif de chauffe (H) et le module de soufflage (B), pour obtenir des préformes (P) pratiquement stériles, et **en ce qu'**un traitement de post-stérilisation à temps de séjour court est mis en oeuvre sur les récipients (T) dans le circuit de transport vers la machine de remplissage (F) pour plus de sécurité encore.

2. Procédé selon la revendication 1, **caractérisé en ce que** le traitement de stérilisation principal est mis en oeuvre avec un produit gazeux (G), préférablement du peroxyde d'hydrogène préparé thermiquement, et **en ce que** le traitement de post-stérilisation est mis en oeuvre avec un produit gazeux (G), préférablement du peroxyde d'hydrogène préparé thermiquement, et/ou un produit liquide (L), préférablement à base d'acide peracétique.

3. Procédé selon la revendication 1, **caractérisé en ce que** le traitement de stérilisation principal est mis en oeuvre avec des faisceaux d'électrons (R), et le traitement de post-stérilisation est mis en oeuvre avec des faisceaux d'électrons (R) et/ou un produit gazeux (G) et/ou un produit liquide (L).

4. Procédé selon au moins l'une des revendications précédentes, **caractérisé en ce qu'**au moins le traitement de stérilisation principal est mis en oeuvre dans un environnement de salle blanche (16), préférablement sous une pression de salle blanche supérieure à la pression présente dans la zone de l'installation de transport.

5. Procédé selon au moins l'une des revendications précédentes, **caractérisé en ce qu'**au moins le traitement de stérilisation principal est mis en oeuvre sur un carrousel de traitement (E1) dans une chambre de traitement (13), comprenant le carrousel de traitement (E1) jusqu'à des zones de transfert et préférablement installée dans un environnement de salle blanche (16), **en ce qu'**un flux d'air stérile est envoyé en permanence dans la chambre de traitement (13), et **en ce que** l'air évacué de la chambre de traitement (13) est préférablement soufflé ou aspiré via les zones de transfert entourant les enceintes d'évacuation d'air (15).

6. Procédé selon au moins l'une des revendications précédentes, **caractérisé en ce que** l'air provenant de la chambre de traitement (13) est évacué vers l'extérieur en évitant l'environnement de salle blanche (16).

7. Dispositif de moulage par soufflage ou par étirage-soufflage et de remplissage de récipients stériles (T) obtenus à partir de préformes (P) dans un dispositif de traitement de récipients (V) comportant des formes de soufflage dans un module de soufflage (B), avec un dispositif de chauffe (H) installé en amont du module de soufflage pour les préformes (P), qui peuvent être transférées dans les formes de soufflage à l'aide des installations de transport (3, 4) et formées en récipients (T) dans les formes de soufflage, avant que les récipients (T) ne soient transportés vers une machine de remplissage (F) et remplis, et avec des modules de traitement de stérilisation pour les préformes (P) et les récipients (T), **caractérisé en ce qu'**un module de stérilisation principal (HS) est pourvu pour les préformes (P) entre le dispositif de chauffe (H) et le module de soufflage (B) pour obtenir des préformes (P) pratiquement stériles, et un module de post-stérilisation (NS) est pourvu entre le module de soufflage (B) et la machine de remplissage (F) pour une post-stérilisation de sécurité à temps de séjour court des récipients (T).

8. Dispositif selon la revendication 7, **caractérisé en ce que** le module de stérilisation principal (HS) est intercalé sur le circuit de transport des préformes (P) entre une installation de transport (3) fournissant des préformes (P) qui sortent du dispositif de chauffe (H) et une installation de transport (4) transférant les préformes dans le module de soufflage, et **en ce que** le module de post-stérilisation (NS) est intercalé dans le circuit de transport des récipients (T) entre une installation de transport (6, 3) sortant les récipients (T) du module de soufflage (B) et une installation de transport (3, 7) transférant les récipients dans la machine de remplissage (F).

9. Dispositif selon la revendication 7, **caractérisé en ce que** le module de stérilisation principal (HS) et le module de post-stérilisation (NS) comportent chacun au moins un carrousel de traitement (E1, E2) et soit des dispositifs d'alimentation et d'application (A) pour un produit gazeux et/ou liquide (G, L), soit au moins un générateur de faisceau d'électrons (11) pour appliquer des faisceaux d'électrons (R) sur et/ou dans les préformes (P) ou les récipients (T).

10. Dispositif selon la revendication 9, **caractérisé en ce que** le carrousel de traitement (E1, E2) est agencé dans une chambre de traitement (13) connectée à une source d'aération (14) avec des enceintes d'évacuation d'air (15) qui recouvrent des zones de transfert d'alimentation et de déchargement, et **en ce que** la chambre de traitement (13) et les enceintes d'évacuation d'air (15) sont préférablement agencées dans un environnement de salle blanche (16) du module de soufflage (B) ou de la machine de remplissage (F).

11. Dispositif selon la revendication 9, **caractérisé en ce que** les enceintes d'évacuation d'air (15) comportent des vannes d'évacuation d'air réglables, préférablement des vannes à clapet, et sont préférablement connectées à une évacuation d'air (17) qui évite l'environnement de salle blanche (16) vers l'extérieur.

12. Dispositif selon la revendication 9, **caractérisé en ce que** les dispositifs d'application (A) pour le produit gazeux et/ou liquide (G, L) comportent chacun un corps en forme de cloche (22) ouvert dans le bas et agencé sur le carrousel de traitement (E1, E2) avec des surfaces de déflexion internes (23) pour le traitement externe de la préforme (P) ou du récipient (T), ainsi qu'une buse médiane (20) qui comporte un orifice de buse (21) orienté latéralement en oblique par rapport à l'axe de la préforme (P) ou du récipient (T).

13. Dispositif selon la revendication 12, **caractérisé en ce que** le corps en forme de cloche (22) est agencé sur un dispositif de guidage de levage (29', 48, 47) du carrousel de traitement (E1, E2) de manière relevable et abaissable par rapport à une fixation (39, 34) pour la préforme (P) ou le récipient (T).

14. Dispositif selon la revendication 12, **caractérisé en ce que** le corps en forme de cloche (22) est aligné dans le module de post-stérilisation (NS) sur le carrousel de traitement (E2) à l'aide d'une fixation (39) pour le récipient (T) et monté de façon stationnaire de telle sorte qu'une fente de manipulation du récipient ouverte latéralement (42) est constituée entre l'embouchure (37) du récipient (T) et le côté inférieur du corps en forme de cloche (22) et de l'orifice de la buse (21).

15. Dispositif selon la revendication 13 ou 14, **caractérisé en ce que** la fixation (39) est une pince de serrage qui peut être attachée sous une bague de support (36) du récipient (T), et **en ce qu'**un doigt d'enlèvement stationnaire (44) est monté à au moins une zone de transfert du système de manipulation (E2) vers une installation de transport associée (3), en dessous ou au-dessus de la trajectoire de déplacement de la pince de serrage, qui s'étend dans le carrousel de traitement (E2) en oblique par rapport à la trajectoire de déplacement du récipient (T) agencé dans la pince de serrage et peut être amené contre le côté opposé à l'installation de transport (3) du récipient (T) adjacent à la bague de support (36) pour la prise d'enlèvement.

16. Dispositif selon la revendication 12 ou 13, **caractérisé en ce que** chaque corps en forme de cloche (22) dans le module de stérilisation principal (HS) comporte plusieurs traverses de support étroites (25) dans sa partie inférieure ouverte, ou est monté avec sa partie inférieure ouverte sur une plaque interchangeable (24) qui comporte les traverses de support (25), et **en ce que** plusieurs passages d'écoulement plus larges (50) vers et depuis les surfaces de déflexion (23) dans le corps en forme de cloche (22) sont définis entre les traverses de support (25), moyennant quoi les traverses de support (25) s'étendent préférablement depuis un bord périphérique vers la buse (20) de manière graduellement récessive et l'orifice de la buse (21) fait saillie vers le bas par rapport aux traverses de support (25).

17. Dispositif selon la revendication 13, **caractérisé en ce que** la fixation (32) pour la préforme (P) au carrousel de traitement (E1) comporte plusieurs doigts de support (34) pour la bague de support de la préforme (36), préférablement sur une plaque de support interchangeable (33), entre lesquels sont définis des passages d'écoulement (35) vers un espace libre agencé en dessous, et **en ce que** le dispositif de guidage du levage comporte au moins un élément de guidage (27) qui porte le corps en forme de cloche (22), qui est guidé dans le carrousel de traitement (E1) de manière coulissante et peut glisser sur un galet de contact (29) grâce à un guidage courbe (30) essentiellement parallèle à l'axe de la préforme (P), moyennant quoi l'élément de guidage (27) ou le galet de contact (29) est préférablement appliqué en direction de positionnement du corps en forme de cloche (22) avec les traverses de support (25) sur l'embouchure (37) de la préforme (P) posée avec la bague de support (36) sur le doigt de support (34) via un ressort de fixation de préforme (31).

18. Dispositif selon la revendication 9, **caractérisé en ce qu'**au moins le générateur de faisceau d'électrons (11) est agencé dans le module de stérilisation principal (HS) et dans le module de post-stérilisation (NS) dans une écluse de rayonnement blindée (Q).
